# EUROPEAN PATENT APPLICATION

(11) **EP 2 684 769 A1**
(43) Date of publication of application: **15.01.2014**
(21) Application number: 12176352.8
(22) Date of filing: 13.07.2012
(51) Int. Cl.: B62B 9/20, B62B 7/12

(54) **Passenger carrier handlebar**

(71) Applicant: Thule Child Transport Systems Ltd, Calgary, AB T2H 1Z9 (CA)
(72) Inventor: Britton, Daniel W., T3H 0S5 Calgary, Alberta (CA); Mayer, Bart T., Fond du Lac, WI 54935 (US); Neeley, Brian D., Kewaskum, WI 53040 (US)
(74) Representative: Valea AB

(57) **Abstract**

A passenger carrier (1) comprising a chassis frame (2) and having a top (5), a bottom (6), a front (3), a rear (4) and two sides (7), two to four wheels (8,10) being attached at the bottom (6) of the chassis frame (2), a handlebar (13) being attached to the chassis frame (2) at the front (3) or the rear (4) of the chassis frame (2) and a side handle (20; 20a,20b) being arranged on at least one of the sides (7) of the chassis frame (2). The side handle (20; 20a,20b) is movable in a lateral direction of the chassis frame (2).

## Description

### TECHNICAL FIELD

The invention pertains to a passenger carrier comprising a chassis having a top, a bottom, a front, a rear and two sides, two to four wheels being attached at the bottom of the chassis, a handlebar being attached to the chassis at the front or the rear of the chassis and a side handle being arranged on at least one of the sides of the chassis.

### BACKGROUND

Passenger carriers, in particular child carriers of the stroller type, are commonly made foldable so that they can be easily converted into a compact and space-saving configuration for transport and storage. A particular kind of passenger carriers are passenger carriers equipped to be used both as bicycle trailers and as manually pushed infant strollers. Such combined strollers and bicycle trailers are disclosed in US 5,344,171, US D633,825 S, US 2008/0143076 A1 and US 2010/0244405 A1. When decoupled from a bicycle, the trailer can be converted into a push-type carrier provided with a push-handle to allow the trailer to be pushed by a walking person in a manner corresponding to that of a conventional baby carrier or stroller.

In the case of the stroller being a combined stroller-trailer it may be a further desire to adapt the stroller frame to better suit being pulled after a bicycle. Accordingly, a bicycle trailer should preferably have an aerodynamically optimized design as it will be pulled after a bicycle at speeds that may be considerably higher than the speeds that are attained with conventional baby carriages and strollers designed for walking and running speeds.

Furthermore, a stroller-type child carrier can be used in different ways also when in a stroller mode. Accordingly, the carrier can be used as a jogging stroller or a walking stroller. When used as a walking stroller, it is not unusual that the person pushing the stroller is accompanied by a small walking child walking beside the stroller and sometimes even holding on to the stroller frame.

It is an object of the present invention to improve the versatility of passenger carriers such as strollers or combined bicycle trailers and strollers.

### SUMMARY OF THE INVENTION

In accordance with the invention there is offered a passenger carrier comprising a chassis having a top, a bottom, a front, a rear and two sides. A side handle is arranged on at least one of the sides of the chassis frame, which side handle is adjustable by translational movement in a lateral direction of the chassis frame between a first, inner position and a second, outer position.

By arranging a side handle that can be laterally extended out on at least one side of the passenger carrier chassis, a user of the passenger carrier is given the freedom of choosing whether to use the side handle or to leave it in the non-extended position. The non-extended position of the side handle will normally be used during transport and storage of the passenger carrier, as it reduces the size of the passenger carrier and allows the passenger carrier to be folded into a more compact and streamlined configuration without the side handle sticking out from the folded passenger carrier frame. The non-extended position of the side handle may also be preferred when the passenger carrier is used in crowded places or in order to give the passenger carrier a more aerodynamic shape when used as a bicycle trailer.

When the side handle is in the extended position, it may be used to grip the passenger carrier from a side, allowing a person to push the passenger carrier while walking or running alongside the passenger carrier. It may also be by an accompanying child to hold on to while walking at the side of the passenger carrier.

It may be preferred that a side handle is arranged at both sides of the chassis in a symmetrical fashion, i.e. at the same level, providing a user of the passenger carrier with the option of having a grippable side handle on each side of the central handlebar.

One or more side handle of the invention may be the only push-handle arrangement used on the passenger carrier. The side handle may be placed at an upper end of a side strut extending in a generally vertical direction of the passenger carrier.

The side handle of the invention may alternatively be provided together with a conventional push-handle. Common push-handles comprise a generally horizontally arranged handle bar that may be straight or curved and that is connected by two generally vertically arranged struts or legs positioned at each side of the passenger carrier chassis. The handle bar may be pivotably connected at the sides of the passenger compartment so that the angle and height of the handle bar can be adjusted.

The handle bar comprises a central gripping member at the front or rear of the passenger carrier and the side handles constitute gripping members at one or both sides of the passenger carrier. If a side handle is arranged on each side of the passenger carrier, the passenger carrier can be pushed with two hands either by gripping with the hands on the handle bar or at the side handles giving a user the option of choosing the gripping position and to shift between different grips, if desired.

The side handle or side handles may be attached to the handlebar and may be extensible from one or both ends of the handlebar. If side handles are arranged to be extended from the ends of the handle bar, they may be used to increase the length of the handle bar, allowing the handle bar to be held with the hands further apart than when the side handles are in the non-extended position. A broader grip generally allows a more controlled steering of the passenger carrier, for example when pushing the passenger carrier over a rough surface. A broad grip may also be preferred for reasons of comfort or in order to suit a larger person pushing the passenger carrier.

The side handle may be telescopically extensible from a part of the chassis different from the handlebar such as a cross bar being part of the chassis frame structure. When the side handle is in the non-extended position it has been telescopically moved to a position on the inside or on the outside of the cross bar where it serves as a reinforcement of the chassis frame structure by increasing the goods thickness of the cross bar. The reinforcement effect may be a particular advantage in a passenger carrier that can be used as a bicycle trailer. Particular demands are put on a combined stroller and bicycle trailer as it needs to be light-weight while still having a strong and durable frame in order to withstand being pulled after a bicycle over a rough surface at speeds that may be considerably higher than the speeds that are attained with conventional baby carriages and strollers which are designed solely for walking and running. Hence, the side handle or side handles may be used as gripping members when the passenger carrier is used in the stroller mode and to provide reinforcement when the passenger carrier is used in the bicycle trailer mode.

It may be preferred that the passenger carrier comprises a releasable locking arrangement for locking the side handle in an extended position. Suitable releasable locking members that may be used in the locking arrangement are snap-locks, bayonet fittings, screw fittings, locking pins, spring-loaded locking elements, frictional locking means, etc., or any other suitable locking member as known in the art. More than one locking member may be provided and combinations of locking members may also be used.

The locking arrangement may be arranged to lock the side handle in at least two different extended positions. A side handle that can be locked at different extended lengths allows the side handle to be adjusted to a comfortable gripping size and to regulate the width between two side handles placed horizontally opposite each other on either side of the handle bar.

The side handle may be extensible in a step-wise fashion or may be extensible by continuous sliding of the side handle with respect to the part of the chassis from which it is telescopically extensible. When arranged to be stepwise extensible, the steps may be provided by releasable locking members in the form of interengaging snap-fittings that require manual pushing or pulling in order to move the side handle out of the locking positions defined by the snap-fittings. A side handle that is extensible without any distinct steps, may be accomplished by two concentrically arranged parts being provided with friction means between the parts so that the parts will not move relative each other except when subjected to pushing or pulling with a force exceeding a threshold locking force. A further option is to arrange the side handle with screw fittings so that the handle can be screwed in or screwed out to the desired position. Screw fittings could be either be an exterior thread on the handle attachment part which is arranged to engage with an inner thread in a frame cross bar or alternatively an exterior thread on a frame crossbar being arranged to engage with an inner thread in the handle attachment part.

The passenger carrier may comprise at least two, such as two to four side handles arranged at the same side of the chassis at different positions in a vertical or height direction of the chassis. A user is thereby provided with the option of selecting an optimal height for the side handle, e.g. adapted to the size of a child walking beside the passenger carrier. Furthermore, pairs of side handles placed horizontally opposite each other on either side of the chassis and at different heights may serve to provide a comfortable grip for users of different lengths. If paired side handles are placed in a vertical position different from the vertical position of the handle bar, a user of the passenger carrier may choose to grip either the handle bar or one of the pairs of side handles depending on which option the user considers to provide the most comfortable gripping position.

The passenger carrier may be a dual-function bicycle trailer and stroller. Accordingly, the passenger carrier may be designed so that it can either be connected to a bicycle in order to be pulled after the bicycle or be used on its own as hand-pushed carrier.

### DEFINITIONS

By the term *"telescopically extensible"* as used herein with respect to the side handle of the invention is implied that the side handle is concentrically arranged inside a tubular member or on the outside of a rod-shaped member in a passenger carrier chassis and is movable relative to the passenger carrier chassis member between a non-extended, inner position with a maximum overlap between the side handle and the passenger carrier chassis member and at least one extended, outer position with a minimum overlap between the side handle and the passenger carrier chassis member.

By a horizontal direction as used herein is implied a direction in a horizontal plane of a passenger carrier when in an in-use-position, i.e. while being pulled after a bicycle or being pushed by a person. A horizontal direction of a handle bar or side handle is a direction coinciding with a horizontal direction of a passenger carrier.

By a vertical direction as used herein is implied a direction in a vertical plane through a passenger carrier when in an in-use-position, i.e. while being pulled after a bicycle or being pushed by a person. A vertical direction of a handle bar or side handle is a direction coinciding with a vertical direction of a passenger carrier.

By a front part of a passenger carrier as used herein is implied a part that is intended to be facing forward, either towards a bicycle if the passenger carrier is coupled to a bicycle or to be facing away from a pusher of the passenger carrier when it is used as a stroller.

A back or rear part of a passenger carrier, or a passenger carrier chassis is a part opposite to the front part and intended to be facing away from a bicycle or towards a person depending on how the passenger carrier is being used.

A passenger carrier, or a passenger carrier chassis has two sides extending between the front and the rear of the passenger carrier or passenger carrier chassis and is oriented generally perpendicular to a longitudinal direction of the passenger carrier, i.e. to a direction of travel when the passenger carrier is pulled after a bicycle or is pushed by a running or walking person.

By a lateral direction as used herein is implied a direction with a main component that is generally perpendicular to a side of a passenger carrier, or a passenger carrier chassis. By a side handle on a passenger carrier being extensible in a lateral direction is implied that the side handle can be extended outwardly from the side of the passenger carrier such that the main direction of lateral extension is in the horizontal direction of the passenger carrier.

### BRIEF DESCRIPTION OF THE DRAWINGS

The invention will be described in greater detail with reference to the appended drawings in which:
- Figure 1: shows a perspective view of a passenger carrier without any covering,
- Figure 2: shows a detail of a side handle on the passenger carrier in Fig. 1,
- Figure 3: shows an upper part of a passenger carrier chassis frame with a pair of side handles,
- Figure 4: shows an upper part of a passenger carrier chassis frame with two pairs of side handles,
- Figure 5: shows a detail of a telescoping side handle attached to a component of a passenger carrier chassis frame,
- Figure 6: shows the telescoping side handle in Fig. 4 in an extended position; and
- Figure 7: shows a further detail of a telescoping side handle attached to a component of a passenger carrier chassis frame.

### DETAILED DESCRIPTION

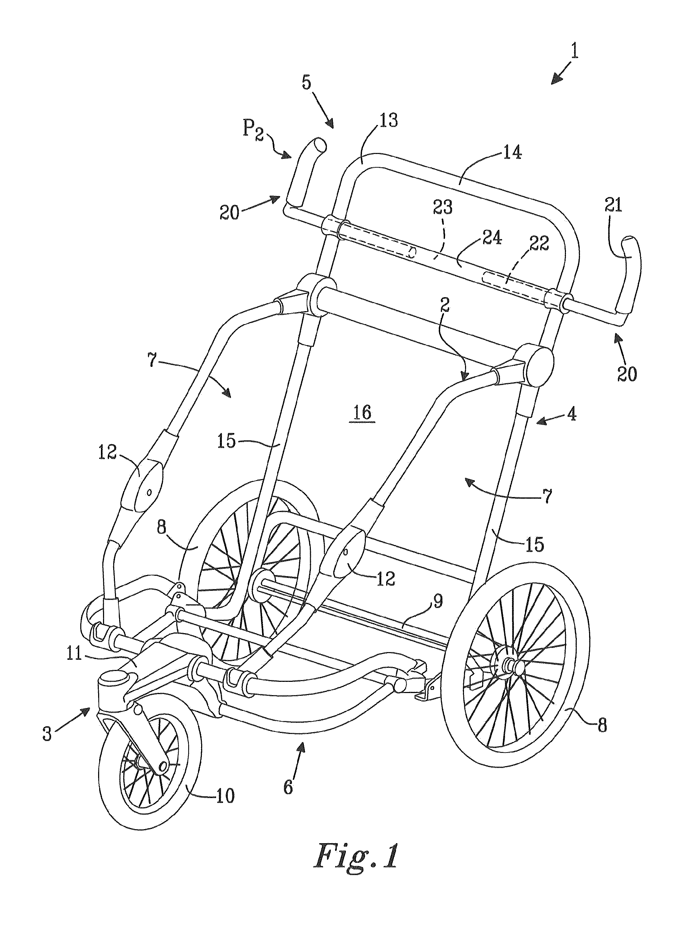

The passenger carrier 1 in Fig. 1 is shown without any covering, revealing the structure of the passenger carrier chassis frame 2. The passenger carrier 1 has a front end 3, a rear end 4, a top 5, a bottom 6 and two sides 7 as seen in Fig. 1. The passenger carrier 1 is a dual function passenger carrier that can be used in a trailer mode, coupled to the rear end of a bicycle and in a stroller mode allowing the carrier to be pushed by a walking or running person. The passenger carrier 1 in Fig. 1 is shown in the stroller mode, i.e. without any connection to a bicycle. Apart from the passenger carrier frame 2 and the covering that is absent in Fig. 1, the passenger carrier 1 comprises two rear wheels 8 mounted on a horizontal rear axis 9 and a front wheel 10 pivotably mounted at the front end 3 of the passenger carrier 1. When the passenger carrier 1 is in the trailer mode, it can be coupled to the rear end of a bicycle by means of a coupling device 11 arranged at the front end 3 of the passenger carrier 1.

The passenger carrier 1 can be folded into a compact transport and storage configuration by folding the passenger carrier frame 2 at lockable joints 12. Foldability is generally a desired feature of a passenger carrier but is not an essential feature of the passenger carrier 1 according to the invention.

The passenger carrier frame 2 further comprises a central handle bar 13 at the rear end 4 of the passenger carrier chassis frame 2. The handle bar 13 has a generally horizontally arranged gripping portion 14 and forms an arch-like connection between two generally vertically arranged side struts 15 extending from the top 5 of the passenger carrier 1 to the bottom 6 of the passenger carrier 1 at each side of a passenger carrier compartment 16 defined inside the passenger carrier chassis frame 2.

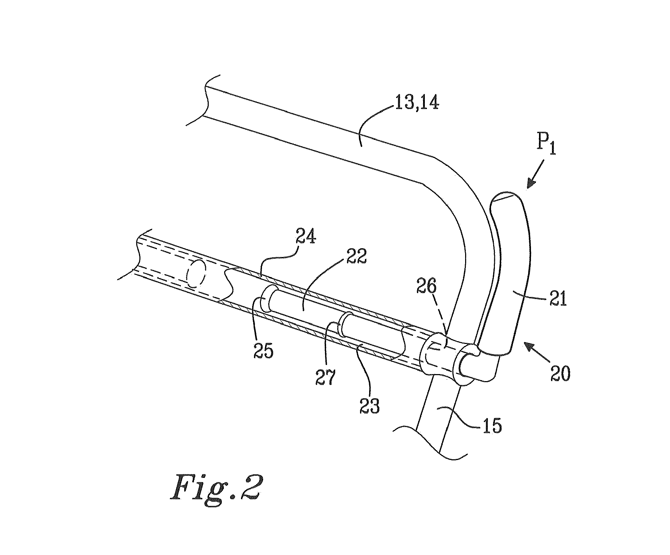

A side handle 20 is arranged at each side 7 of the chassis frame 2. The side handle 20 has a gripping part 21 and an attachment part 22. The attachment part 22 is rod shaped and is inserted into a central bore 23 in a handle cross bar 24 extending horizontally below the handle bar 13, between the side struts 15 and is telescopically movable in the central bore between an inner non-extended position P₁ as shown in Fig. 2 and an outer fully extended position P₂ as shown in Fig. 1.

The inner position P₁ for the side handle 20 may be employed when the passenger carrier 1 is transported or stored or when it is used as a bicycle trailer. A user of the passenger carrier 1 may also choose to leave one or both side handles 20 in the inner position P₁ when using the passenger carrier 1 in the stroller mode.

The outer position P₂ for the side handle 20 may be desirable when using the passenger carrier 1 in the stroller mode in order to allow a person pushing the passenger carrier 1 to use a broader grip than is possible with only the central handle bar or to make it easier to push the passenger carrier 1 when walking or running at the side of the passenger carrier 1. A laterally extended side handle 20 may also be used by an accompanying child walking at the side of the passenger carrier, or to hang items on such as shopping bags or similar.

When the side handles 20 are in the inner position P₁ the attachment parts 22 are fully inserted into the central bore 23 of the handle cross bar 24, as indicated in Fig. 2. In this position, the attachment parts 22 reinforce the handle cross bar 24 which may be particularly advantageous when the passenger carrier is used as a bicycle carrier. In Fig. 2, the attachment parts 22 are shown to meet in the centre of the chassis cross bar 24 when the side handles 20 are in the inner position P₁. Although such arrangement provides maximum reinforcement of the handle cross bar 24, the attachment parts may alternatively only be sufficiently long to provide appropriate attachment of the side handles 20 to the handle cross bar 24 and to allow the side handles 20 to be extended sufficiently far out on the side of the passenger carrier 1.

In the embodiment shown in Figs. 1 and 2, the chassis cross bar 24 and the attachment parts 22 fitted inside the chassis cross bar 24 have circular cross-sections. The attachment parts 22 can be telescopically slid in the inner bore 23 in the handle cross bar 24 by pushing or pulling at the side handles 20, as required depending on whether the side handle is transferred in a direction from the outer position P₂ to the inner position P₁ or from the inner position P₁ to the outer position P₂. It is to be understood that other cross-sectional shapes may be used for the attachment parts 22 and the chassis cross bar 24 as long as the shapes are mating so that the attachment parts 22 of the side handles 20 can be moved in the handle cross bar 24. Alternative cross-sectional shapes include oval, rectangular and quadratic shapes as well as rounded asymmetrical shapes.

The translational movement of the attachment parts 22 in the handle cross bar 24 may alternatively be accomplished by providing the attachment parts 22 and the chassis cross bar with mating threads so that the side handles 20 can be screwed in and out between different positions.

The side handles 20 may be provided with end stopping members 25 arranged on the attachment parts 22 as shown in Fig. 2. The end stopping members 25 may be formed as thickened portions which are arranged to contact inner rims 26 arranged at the ends of the handle cross bar 24 in order to prohibit that the side handles 20 are pulled out past the outer position P₂. In this manner, the end stopping members 25 define the outer position P₂ and constitute securement means for securing the attachment parts 22 inside the handle cross bar 24. As is indicated in Fig. 2, the side handles 20 may further be provided with one or more intermediate stopping members 27 placed at intermediate positions on the attachment parts 22 to allow the side handles 20 to be laterally extended to a position between the inner position P₁ and the outer position P₂. The intermediate stopping members 27 may be formed by knobs or rings on the surface of the attachment parts 22 that locally increase the diameter of the attachment parts 22 to form a stop against the inner rims 26 at the ends of the handle cross bar 24. The intermediate stopping members 27 are arranged to allow that the side handles 20 are pulled out past the intermediate position to the outer position P₂. This can be accomplished, e.g. by making the intermediate stopping members 27 from a resilient material or by using spring-loaded locking members, as known in the art. Each attachment part 22 can be provided with more than one intermediate stopping member 27 in order to provide a greater range of extended positions for the side handles 20.

The side handles 20 may alternatively be arranged without any distinct intermediate positions between the inner position P₁ and the outer position P₂ allowing the degree of extension of the side handles to be freely chosen between the inner position P₁ and the outer position P₂. Friction enhancing means may be arranged between the attachment parts 22 and the inner bore 23 of the handle cross bar 24 to restrict unintentional movement of the attachment parts 22 in the inner bore 23 of the handle cross bar 24. Furthermore, releasable locking members such as spring-loaded releasable locks, bayonet fittings, screw locks, locking pins, etc. may be provided either alone or together with one or more of the end stopping members 25, intermediate stopping members 27, and friction enhancing means as disclosed herein. Such releasable locking members can be used to lock the side handles 20 in a desired position and are preferably arranged in a readily accessible location such as on the side handles 20 or on the handle cross bar 24.

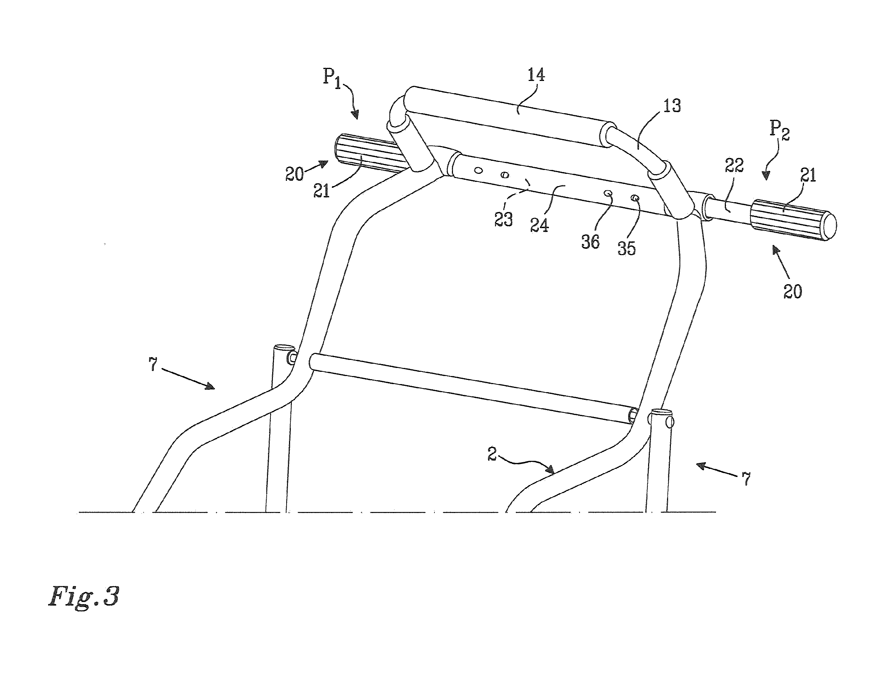

Fig. 3 shows the handle part of a passenger carrier 1 having a set of side handles 20 arranged to be laterally extended from a handle cross bar 24 in the upper part of the chassis frame 2. The cross bar can be an accessory cross bar on which accessories such as hooks, bags, etc. can be mounted, a horizontal handle gripping part, a combination accessory cross bar and horizontal handle gripping part or may merely be a stabilizing horizontal member of the chassis frame. The arrangement of the side handles 20 is similar to that in Figs. 1 and 2, with an attachment part 22 of each side handle 20 inserted in an inner bore 23 in the handle cross bar 24. The side handles 20 are shown with one handle in an inner, non-extended position P₁ and the other side handle in an outer, extended position P₂. The side handles are locked in the respective positions by manually operated interengaging locking members in the form of spring-loaded knobs 35 engaging with holes 36 in the handle cross bar 24.

The side handles 20 in Fig. 3 have laterally extending gripping parts 21. The gripping parts may alternatively be generally vertically arranged gripping parts as shown in Figs. 1 and 2 or may be arranged so that they can be pivotally adjusted in a desired angle relative to the attachment part 22.

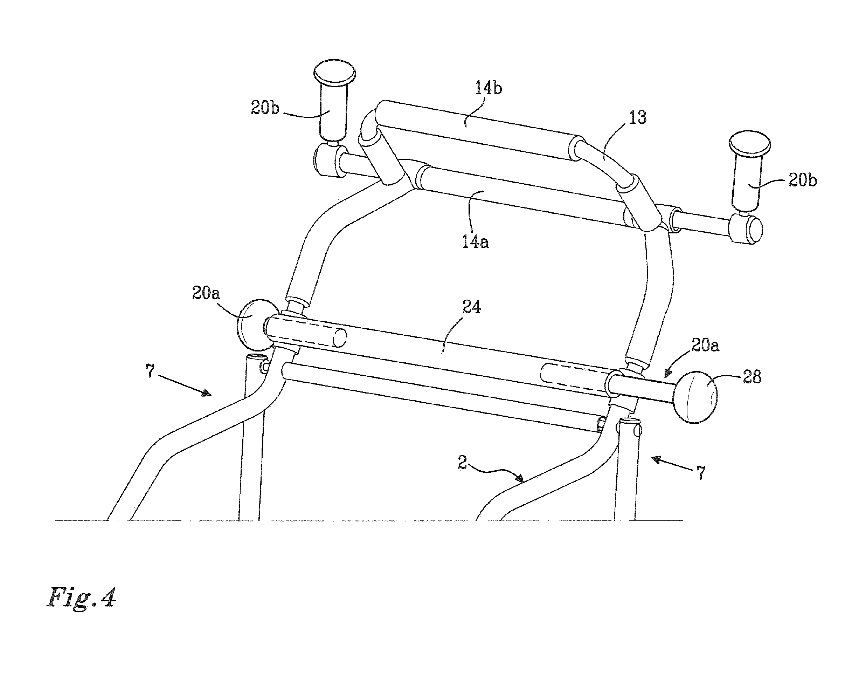

In Fig. 4 is shown the handle part of a passenger carrier 1 having two side handles 20a, 20b arranged at each side 7 of the passenger carrier 1. A first set of side handles 20a are arranged to be laterally extended from a chassis cross bar 24 in the upper part of the chassis frame 2 and a second set of side handles 20b are arranged to be extended from a horizontally arranged first gripping portion 14a or accessory cross bar of a handle bar 13 having two parallel gripping portions 14a, 14b. The first and second sets of side handles 20a, 20b are placed so that the first set of side handles 20a is located below the second set of side handles in a vertical direction, allowing a user the choice between an upper side handle and a lower side handle.

The first set of side handles 20a are shown with rounded end knobs 28 instead of the upwardly pointing gripping parts 21 arranged at the ends of the second set of side handles 20b. The arrangement shown for the first set of side handles 20a may be preferred when there is a desire of making the side handles as inconspicuous as possible in the non-extended position. The gripping parts 21 of the first set of side handles 20a will be the portion of each side handle extending out of the chassis cross bar 24 when the side handle 20a is in the extended outer position.

The design of any end knobs or gripping members at the outer ends of the side handles of the invention may be freely chosen within the scope of the invention.

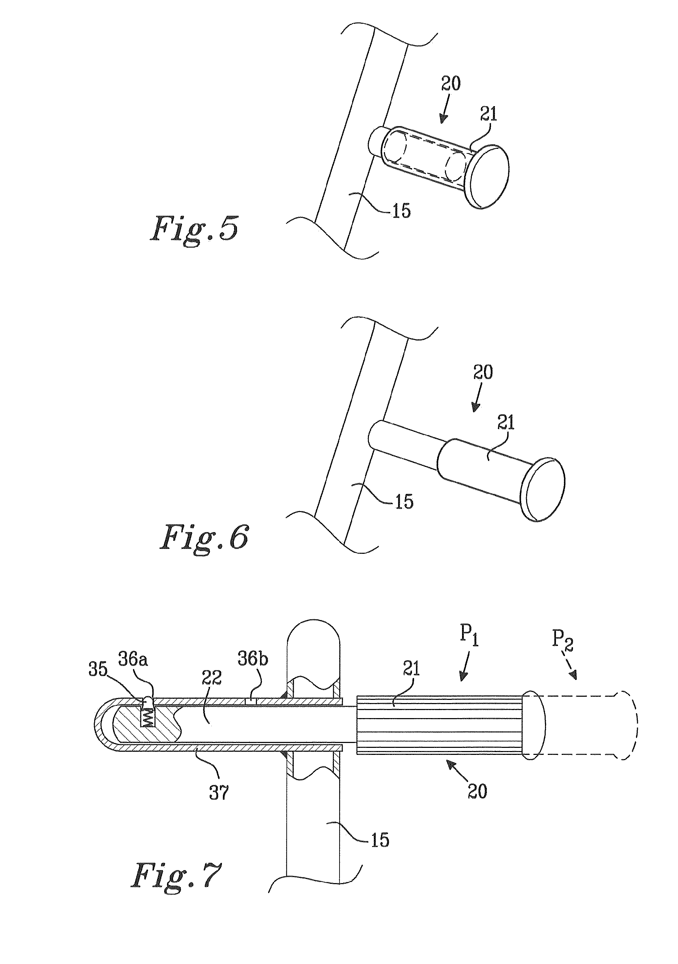

Figs. 5 and 6 show a detail of a laterally extensible side handle 20 comprising an outer tubular portion which is arranged to be moved between an inner position, as shown in Fig. 5 and an outer extended position as shown in Fig. 6. The side handle 20 in Figs. 5 and 6 can be used instead of, or in addition to the side handles in Figs. 1-4. Locking members for locking the side handle 20 in a selected position may be provided, as disclosed herein.

A further example of a laterally extensible side handle 20 is shown in Fig. 7. The side handle in Fig. 7 has a generally horizontally extending gripping portion 21 and an attachment portion 22 in the form of a rod being inserted into a receiving housing 37 the housing 37 and the side handle 20 are mounted perpendicular on a generally vertically extending chassis frame member, such as a side strut 15, as disclosed in connection with Fig. 1. A handle arrangement as shown in Fig. 7 may be used to form one or two side handles that may be the only handle or handles on a passenger carrier in accordance with the invention or may be arranged in addition to further side handles and/or a central handle bar.

The side handle 20 in Fig. 7 is shown in an inner, non-extended position P₁ with a locking knob 35 engaged with a first locking opening 36a in the housing 37. The side handle 20 can be extended to an outer position P₂ by manually releasing the spring-loaded locking knob 35 and pulling out the gripping part 21 until it locks with the locking knob 35 in a second locking opening 36b in the housing 37.

## Claims

1. A passenger carrier (1) comprising a chassis frame (2) and having a top (5), a bottom (6), a front (3), a rear (4) and two sides (7), and a side handle (20; 20a,20b) being arranged on at least one of said sides (7) of said chassis frame (2), **characterized in that** said side handle (20; 20a,20b) is adjustable by translational movement in a lateral direction of said chassis frame (2) between a first, inner position (P₁) and a second, outer position (P₂).

2. A passenger carrier according to claim 1, wherein a handlebar (13) is attached to said chassis frame (2) at said front (3) or said rear (4) of said chassis frame (2).

3. A passenger carrier according to claim 1 or 2, wherein said side handle (20; 20a,20b) is telescopically movable in said lateral direction of said chassis frame (2).

4. A passenger carrier according to claim 1, 2 or 3, wherein a side handle (20; 20a,20b) is arranged at both sides (7) of said chassis frame (2).

5. A passenger carrier according to any one of claims 2-4, wherein said side handle (20; 20a,20b) is attached to said handlebar (13) and is movable in a direction of extension of said handlebar (13).

6. A passenger carrier according to claim 1-4, wherein said side handle (20; 20a,20b) is movable in a lateral direction from a part of said chassis frame (2) which is not a handlebar (13).

7. A passenger carrier according to claim 6, wherein said chassis frame (2) comprises a chassis cross bar (24) being part of said chassis frame (2) and said side handle (20; 20a,20b) is movable in a lateral direction from an end of said chassis cross bar (24).

8. A passenger carrier according to any one of the preceding claims, wherein said passenger carrier (1) comprises a locking arrangement for locking said side handle (20; 20a,20b) in an extended position.

9. A passenger carrier according to claim 8, wherein said locking arrangement is arranged to lock said side handle (20; 20a,20b) in at least two different extended positions.

10. A passenger carrier according to any one of the preceding claims, wherein at least two, such as two to four side handles (20a,20b) are arranged at the same side (7) of said chassis frame (2) and at different positions in a vertical direction of said chassis frame (2).

11. A passenger carrier according to any one of the preceding claims, wherein said passenger carrier (1) is a dual-function bicycle trailer and stroller.
